# EUROPEAN PATENT APPLICATION

(11) **EP 2 506 176 A1**
(43) Date of publication of application: **03.10.2012**
(21) Application number: 11160500.2
(22) Date of filing: 30.03.2011
(51) Int. Cl.: G06F 21/00

(54) **Establishing unique key during chip manufacturing**

(71) Applicant: Irdeto Corporate B.V., 2132 LS Hoofddorp (NL)
(72) Inventor: Van Foreest, Arnoud Evert, 2132 LS, HOOFDDORP (NL); Benedetti, Ettore, 2132 LS, HOOFDDORP (NL); Dekker, Gerard Johan, 2132 LS, HOOFDDORP (NL); Xu, Sheng Bo, 2132 LS, HOOFDDORP (NL)
(74) Representative: Pelly, Jason Charles

(57) **Abstract**

Methods and systems related to producing chips with the uniqueness property are disclosed. A random bit vector is generated using a hardware random number generator on the chip or "on the fly" as a hardware component is being produced. The generated random bit vector is stored in a one-time programmable memory of the chip. A value is derived in the chip from the random bit vector programmed in the one-time programmable memory of the chip. The derived value is exported to an external receiving module communicably connected to the chip to enable a security application provider to encrypt a message that is decryptable by the chip using a key based on the random bit vector programmed in the one-time programmable memory of the chip.

## Description

### FIELD OF THE INVENTION

The present disclosure relates to establishing a unique key for a device. In particular, though not necessarily, this disclosure relates to methods for establishing a unique key during the manufacturing process, a device manufactured using said methods.

### BACKGROUND

Security applications often benefit from cryptographic functions and data structures implemented using hardware circuits inside a chip. These implementations make it hard for an attacker to observe or influence the operation of the cryptographic functions and the associated data structures. In some chip implementations (e.g., smart cards), further technical measures are provided to protect the chip against attacks aiming to observe or modify the operation of cryptographic functions. The chips also may be included in a consumer electronics device, such as a mobile phone, a TV set, a PC or a tablet PC.

The production process for consumer electronics devices supporting security applications involves chip manufacturers, consumer electronics device manufacturers, and security application providers. Generally, security application providers offer security applications for consumer electronic devices that include chips with support for cryptographic functions and data structures (security chips). For example, smart cards include special-purpose chips (also referred to as microchips or integrated circuits) with built-in hardware circuits intended to support a particular security application. Exemplary security applications for smart cards include wireless applications like controlling access to GSM networks, controlling the conditional access to pay-TV services, or enabling the access to PCs and buildings, etc.

Smart cards and other types of security chips are produced according to a semiconductor chip production process, which may vary significantly between manufacturers and semiconductor technologies. The hardware production process includes at least three phases.

In the first phase ("die fabrication"), a die is fabricated by a die or chip manufacturer. This phase begins with a wafer of semiconductor material or any suitable substrate. In a series of lithographic steps using a sequence of masks, the various logic blocks, memory structures and other semiconductor circuits are created. The memory structure includes read-only memory (ROM), programmable read-only memory (PROM), reprogrammable ROM (EEPROM, flash) and random access memory (RAM). ROM memory typically comprises some control software programs and data that is not subject to change during the commercial lifecycle of the chip. A single wafer typically contains a large number of copies of the same chip circuit. After the wafer processing the produced chip circuits are tested (e.g., high-speed probing) and sorted into functional and non-functional sites and marked with a dye. The wafer is cut into a number of identical dies. The functional dies may be mounted onto other materials (e.g., plastic tape) to facilitate further processing, as dies can be fragile.

In a second phase ("chip initialization"), a chip, comprising the functioning die, may be initialized, such that various components of the chips may be activated and/or initialized for a particular application. A different set of features may be activated for a different application for the chip. Thus, some modules on the chip are activated and some are not. This process may be performed by an initializer machine which is configured to load non-chip specific (but application-specific) data. The second phase may be performed by the same entity as the entity performing the first phase, perhaps even in the same facility, to increase integrity of the chip initialization process.

A centralized system may monitor and control the initialization procedure to coordinate various processes involved in chip initialization. Testing and quality assurance may be also be performed at this time. Furthermore, because the firmware of the chip may be only partially contained in the mask-programmed ROM, this phase allows further data tables and further program code to be written in one-time programmable memory (PROM). This step allows extensions and modifications to be made to the chip without having to redesign the ROM mask. After this step, the chip is initialized to support certain applications. This phase involves the loading of initialization data that are same for all chips for a particular application. The processing time of this phase is relatively fast, and efforts are made to reduce the amount of required testing time per chip. This phase makes the chips suited for a particular application.

In a third phase ("chip personalization"), the chip is personalized with a key and/or an identifier so security application providers can use the key and/or the identifier for a desired security application. Other personalization data, which differs from chip to chip, may also be loaded at this time. Typically, the key and/or the identifier comes from a pre-generated list of unique keys, which are maintained by the chip manufacturer. The third chip personalization phase may be performed by the same or a different entity as the entities performing the first and second phase.

Once the die is fabricated and the chip is initialized and personalized (i.e., the three production phases), it may be provided to a device manufacturer such that it can be integrated with other chips and encasings, such that it can be shipped to the ultimate customers.

Notably, the hardware production process uses the split into global data, application-specific data, and personal data (in this order) to minimize production costs and to maximize production efficiency. The increasing specialization of the hardware production process allows the earlier phases to be performed at a much faster speed, using simpler and faster manufacturing machines while leaving the more specialized processes towards the later phases. The efficiency of each of the production phases directly affects the cost of chip production.

A typical security application may require that the hardware component includes a uniquely generated key or a set of keys. This creates a hardware component that has the uniqueness property. These keys are typically loaded into the PROM of a chip during the third phase, chip personalization, of the hardware production process.

From a security application provider's perspective, the production of a chip may involve trusting a plurality of entities that are part of the production process. At each phase of the production process, more entities are typically added to the production chain. When a chip passes through more entities in the production process, it may be more likely that the integrity of any one of the entities would be compromised. Also, a security application provider may have to verify the integrity of more parties, thereby adding more points of weakness in the security scheme. In addition, more entities may increase costs for implementing the auditing process for each entity.

There is a need for an improved process for chip production to reduce the number of entities where the integrity has to be verified, as well as being able to provide an efficient method for mass manufacturing of chips with a unique key.

### SUMMARY OF THE INVENTION

Security application providers rely on the various steps in chip production and CE device manufacturing to reliably establish the cryptographic functions and the associated protected data in those chips and devices.

The die fabrication produces the desired hardware circuits on a semiconductor wafer. The die should be produced without any security backdoors. If present, such a backdoor enables an attacker to obtain or modify the relevant secret information or the cryptographic functions that would compromise a security application. Although it would be difficult to insert such hardware circuit modifications into the manufacturing process, it is a serious attack for a security application.

The chip initialization loads the intended firmware and the other initialization functions. This should be implemented without the introduction of any security backdoors. If an attacker can modify the initialization data that enables a hidden method to export or leak secrets to an adversary, this would form a serious security breach.

The chip personalization establishes the unique secret keys in the initialized chip. This process should not export or leak those secrets to an adversary. If the adversary can obtain or modify the unique secret information, a security application is seriously breached.

During consumer electronics (CE) device manufacturing, further firmware and secret codes may be installed. Some potential security breaches could occur at this stage.

Hence, the security application provider would need to verify the integrity of several production steps in order to establish that the production process meets the security requirements and it prevents attacks to the security application during the entire manufacturing chain.

Accordingly, there is a need for an improved process that can allow chip personalization with a reduction in the number of entities that could be subject to attacks on a security application, while maintaining relative efficiency for the mass manufacturing of chips with the uniqueness property.

This disclosure describes an improved hardware production process. In some embodiments, chip personalization may be performed at an earlier phase of the production process (e.g., during the first phase, die fabrication). For example, the loading of the unique key (chip personalization) may be performed during the die fabrication phase. During die fabrication, the unique key may be loaded onto the PROM of the chip during the testing of the die. The process of generation of the unique key is sufficiently efficient to allow the loading of the key during die testing. In certain embodiments, a derived key from the key loaded onto the die is exported during the die fabrication phase.

In one variant of the improved process, the exporting of the derived key may be performed at a later phase of the production process if the derived key is exported in authenticated form. In another variant, the unique key may be generated and exported at a stage after die fabrication. In these variants, the authentication of the derived key may allow the security application provider to verify that the derived key originated from a personalization circuit placed on the die during the die fabrication phase. By exporting the key at a later stage of the process, the efficiency of personalization during die fabrication is substantially maintained at a high level as compared to conventional systems.

In some embodiments, the entity performing die fabrication may load a signature key for a plurality of dies (i.e., a signature key that may be the same for a batch of dies) in the PROM of the die during die fabrication. If the derived key is exported after die fabrication phase of the production process, the derived key may be signed with the signature key that was loaded during die fabrication. The signature created using the signature key may be exported along with the derived key. The exported signature may then be used to verify that the derived key actually originated from the circuit made during the die fabrication step. Other mechanisms/schemes besides the use of a signature key may be used to ensure the authenticity of the exported derived key.

A method for establishing a key for a chip including a die and system for performing said method are disclosed. From a hardware random number generator communicably connected to a one-time programmable memory in the chip, a series of random bits is received, said series of random bits forming a random bit vector. The random bit vector are stored in the one-time programmable memory of the chip, wherein the key for the chip is based on the random bit vector. In some cases, the chip is a packaged die.

In one embodiment, in response to storing the random bit vector, using a derivation module on the chip, a value may be derived from the random bit vector stored in the one-time programmable memory of the chip to generate a derived value. The derived value may be exported to an external receiving module communicably connected to the chip to enable a security application provider to encrypt a message that is decryptable by the chip using a key based on the random bit vector stored in the one-time programmable memory of the chip. The feature of exporting the derived value, which may be less security sensitive than the random bit vector or other internal intermediate values, allows an external entity such as a security application provider, to transmit messages in a relatively secure manner to the particular chip. The derived value may be created in various ways.

In some embodiments, deriving the value from the random bit vector stored in the one-time programmable memory of the chip to generate a derived value comprises reading a public key associated with the security application provider from a read-only memory on the chip, and encrypting, in the chip, the random bit vector stored in the one-time programmable using the public key, wherein the derived value is based on the encrypted random bit vector. This feature aims to ensure that only the intended security application provider with the secret key corresponding to the public key can decrypt the encrypted random bit vector.

In some embodiments, deriving the value from the random bit vector stored in the one-time programmable memory of the chip to generate a derived value comprises providing the random bit vector stored in the one-time programmable memory to a pseudo random number generator on the chip to generate an expanded key having a longer bit length than the random bit vector, reading a public key associated with the security application provider from a read-only memory on the chip, and encrypting, in the chip, the expanded key using the public key, wherein the derived value is based on the encrypted expanded key. The expand module generating the expanded key may be implemented as part of a series of instructions in one-time programmable or mask read only memory. The expand module may be implemented in hardware as part of the (secure core of) chip. A feature of the expand module is to reduce the amount of memory required to store the random bit vector (e.g., usage of the one-time programmable memory). The read-only memory on the chip may be at least one of: a mask read-only memory and a one-time programmable read-only memory.

In some embodiments, deriving the value from the random bit vector stored in the one-time programmable memory of the chip to generate a derived value comprises generating, using a public key generator in the chip, a public key from the random bit vector stored in the one-time programmable read-only memory using the random bit vector as a secret key, wherein the derived value is based at least in part on the public key.

Leveraging a similar or same expand module, in some embodiments, deriving the value from the random bit vector stored in the one-time programmable memory of the chip to generate a derived value comprises providing the random bit vector stored in the one-time programmable memory to a pseudo random number generator on the chip to generate a secret key having a longer bit length than the random bit vector, and generating, using a public key generator on the chip, a public key corresponding to the generated secret key, wherein the derived value is based in part on the public key.

To ensure that public key generation from a secret key can be performed efficiently in the chip, concerns of key size and time needed to generate the public key may be considered. In some preferred embodiments, the public key is generated using a key generation method under the Elliptic Curve Cryptography scheme or the ElGamal encryption scheme.

Public key generation, and other similar mechanisms in the derivation of the derived value may be implemented in firmware in a one-time programmable read-only memory of the chip.

To authenticate that the exported derived value is authentic, in some variants, deriving the value from the random bit vector stored in the one-time programmable memory of the chip to generate a derived value further comprises performing, in the chip, an authenticated encryption on the encrypted random bit vector using a symmetric signature key associated with the chip, to generate an authenticated key, wherein the derived value is based on the authenticated key. In some variants, deriving the value from the random bit vector stored in the one-time programmable memory of the chip to generate a derived value further comprises performing, in the chip, an authenticated encryption on the generated public key using a symmetric signature key associated with the chip, to generate an authenticated key, wherein the derived value is based on the authenticated key. For example, the authenticated public key includes encrypted data and an authentication tag, wherein the encrypted data and the authentication tag are decryptable and verifiable, respectively, by the security application provider having the symmetric signature key associated with the chip.

In some embodiments, the generated series of random bits from the hardware random number generator is communicably provided to the die of the chip via a testing probe of a die testing machine, wherein the hardware random number generator is external to the chip. The die testing machine may be a system configured to test the various circuits or input values into the circuit of a die of the chip during die fabrication. The die testing machine may include a testing probe. In some other embodiments, the hardware random number generator is part of the chip. In yet some embodiments, the hardware random number generator generates the series of random bits during testing of the die of the chip. In some situations, the hardware random number generator is activated to generate the series of random bits in response to a request from the security application provider. For example, the security application provider may request the export of the derived value when the chip has been integrated with a consumer electronic device. Preferably, the exported derived value includes an authentication tag, such that the exported value can be tracked back to the circuit in the die responsible for the uniqueness property of the chip.

While this disclosure uses chips and consumer electronic devices as an illustrative example, one skilled in the art would understand that the methods and devices may be used for other types of hardware devices that requires a unique key.

Hereinafter, embodiments of the invention will be described in further detail. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. It should be appreciated, that the embodiments disclosed may not be construed as limiting the scope of protection for the present invention.

### BRIEF DESCRIPTION OF THE DRAWINGS

Aspects of the invention will be explained in greater detail by reference to exemplary embodiments shown in the drawings, in which:
**Fig.1** shows an exemplary scheme for using a unique key of a chip;
**Fig.2** shows another exemplary scheme for using a unique key of a chip;
**Fig.3** shows an illustrative chip personalized with a symmetric unique key using an improved scheme;
Fig.4 shows another illustrative chip personalized with an asymmetric unique pair of keys using another improved scheme;
**Fig.5** shows an illustrative method for establishing a uniqueness property in a hardware component; and
**Fig.6** shows another illustrative method for establishing a uniqueness property in a hardware component.

### DETAILED DESCRIPTION OF THE DRAWINGS

During the chip personalization phase, a chip manufacturer may load a unique key onto the device by programming a unique value into the chip's one-time programmable read-only memory. The unique value may be uniquely generated. The unique key is based at least on the unique value programmed on the one-time programmable read-only memory. The unique key is kept secret and may be referred to a secret key or secret module key. A list of unique values for the unique key may be generated and maintained by the chip manufacturer. The unique key is associated with a unique identifier data for the chip. This association of the unique key and the unique identifier for the chip may be maintained by the chip manufacturer.

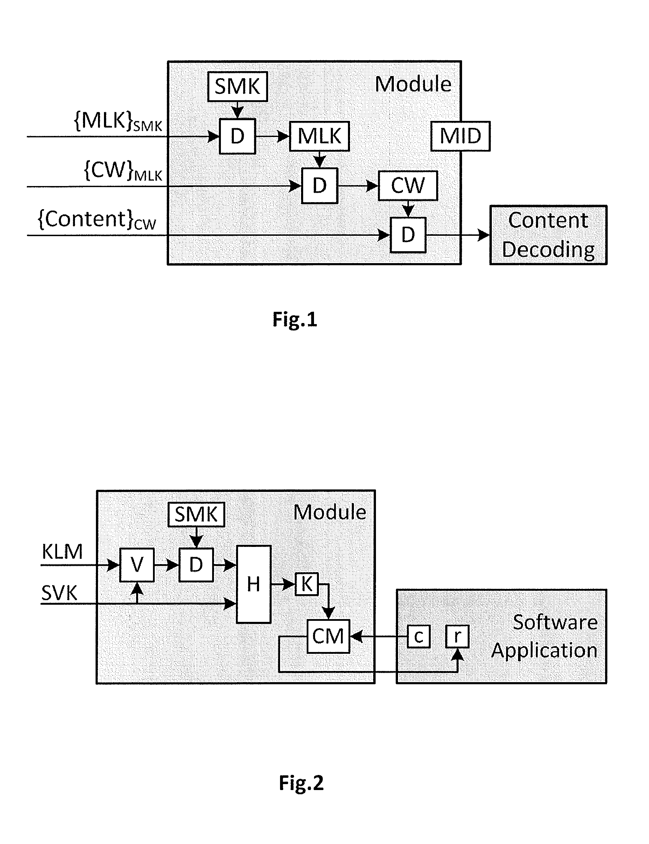

Seen in exemplary **Fig.1****,** the chip manufacturer programs a Secure Module Key (SMK) into the one-time programmable read-only memory of the chip (shown as Module) together with a Module Identifier (MID). The chip manufacturer, accordingly, maintains a list of <MID, SMK> pairs for each chip it has programmed. The list of pairs is kept secret (preferably known only to the security application provider using those chips). The security application provider then receives a list of <MID, SMK> pairs such that it may encrypt a Module Load Key (MLK) with the SMK corresponding to a MID of a chip. The MLK may be used as a session key to load further keys. An example of a further key is a control word used in a broadcast setting.

In another example, a chip manufacturer can program the one-time programmable read-only memory with a secret key of a public cryptography key pair and an MID associated with the chip. Public key cryptography allows the MID and the public key of the public cryptography key pair to be published, and the published information about the chips enables security application providers to establish a secure communication with the chip. The chip manufacturer generates a list of key pairs or receives it from a security application provider. The chip manufacturer loads the secret key of a key pair and the associated MID onto the chips. After the secret key has been loaded, the chip manufacturer can delete the secret key and publishes the associated public key and the MID. The security application provider uses the corresponding public keys to communicate with the chips.

Seen in exemplary **Fig.2****,** the chip (shown as Module) has a Secret Module Key (SMK) and a corresponding MID (not shown). Said SMK serves as the secret key of a public key pair for this chip. The public key associated with the corresponding MID may be used, by a security application provider for example, to load other keys into the chip. In one embodiment, a security application provider transmits a Key Loading Message (KLM) and a Signature Verification Key (SVK) associated with the security application provider to the chip. The chip verifies, using the 'V' module, the signature in the KLM using SVK (for authenticity), and decrypts, using the 'D' module, contents of the KLM using SMK (ensuring confidentiality). SVK and the decrypted key is provided as inputs to a Hash Function (H) to produce further key(s) (seen as 'K'). Said produced key(s) may be used in a Cryptographic Module CM to generate responses to a challenge provided by a software application. In another embodiment, the same key transport protocol seen in **Fig.2** can be used to transport control words in the broadcast setting.

As an alternative to loading the keys by the chip manufacturer, some chips uses a cryptographic co-processor to generate a unique RSA public key cryptography key-pair. The cryptographic co-processor may be external to the chip. However, generating an RSA-key pair requires substantial processing time. For this reason, RSA key-pair generation is not used during the high-throughput phases of hardware production. Rather, RSA key-pair generation may be used at a later stage when the chip is being personalized/packaged for a particular consumer electronics device.

For illustration, an exemplary RSA key generation method is described. Typically, RSA key generation uses a probabilistic module to generate a two random big, odd numbers, and test to see if they are prime numbers. If they are not, two new random big, odd numbers are generated again, and the process continues until both of the numbers are prime. For instance, RSA key generation could take from 3 to 7 seconds to execute to generate a 4096 bit key pair. Due to the slowness of RSA key generation, generating RSA keys during an early stage of chip manufacturing would significantly decrease the production efficiency and throughput of the hardware production process. Consequently, if an RSA key generation module is used to personalize the chip, it is done after the chip has been manufactured, and during the time when it is being packaged for a particular consumer electronics device.

To improve upon the systems seen in **Fig.1** and **Fig.2****,** alternative methods for establishing a unique key are described. The alternative methods rely less on the chip manufacturer to keep track of a list of unique keys, as well as being able to provide an efficient method for mass manufacturing of chips having the uniqueness property.

In the less preferred methods shown in **Fig.1** and **Fig.2****,** the chip manufacturer loads a unique, secret value for the unique key of each chip (e.g., onto the one-time programmable read-only memory) during the chip personalization phase of the hardware production process. The loading of said key requires the manufacturers to have knowledge of the unique key. Hence, the chip manufacturer (or more precisely the entity programming the unique key in the PROM of the chip) becomes a critical aspect of the security application.

Rather than relying on the chip manufacturer to load the unique key onto the chip from a list of pre-generated unique values (typically stored in a centralized database), which is vulnerable to massive key theft attacks, a hardware random number generator in the chip may be used to internally generate the unique number. In some embodiments, a hardware random number generator is external to the die, but is communicably connected to the die during a testing/probing part of die fabrication through the testing probe. The unique number as generated by the random number generator is used to determine the unique key of the chip. Said unique number is intrinsic to the chip itself, and the hardware random number generator provides the uniqueness property in the chip. In one sense, the hardware random number generator allows a unique value to be generated "on the fly" such that the security application provider no longer has to provide a list of pre-generated values in a central database to be loaded on to the hardware components.

In a preferred embodiment, the random number generator comprises a Random Bit Generator (RBG), used for generating a random bit vector. The RBG amplifies physical sources of randomness in the chip to enable the generation of a unique key based on the generated random bit vector (for use as the unique key) in the chip. In this manner, the uniqueness property of the chip is preserved. The generated random bit vector is subsequently provided to a one-time programmable read-only memory for storage. The generated unique bit vector is stored/programmed in the one-time programmable read-only memory. A value may be derived from the stored random bit vector. The stored random bit vector is then exported in the form of a derived key value to an external entity. The export of the derived key enables the (later) generation of further messages uniquely targeted for a specific chip (i.e., the further messages are decryptable using a unique key that is based on the random bit vector stored on the one-time programmable read-only memory).

Because the unique value that forms the basis for the unique key is generated and programmed/stored internally in the chip, the die fabrication process is common to all the dies. The need to vary the hardware production process for each chip and to generate and load a different, unique key for each chip from a list of unique values is eschewed. Also, because the circuit enabling the uniqueness property is the same across all dies, efficiency of the production process is kept at a high level.

Accordingly, the preferred embodiment enables an efficient production process while preserving the uniqueness property of the chips. As the chip manufacturer no longer holds a list of pre-generated secret keys, theft of the secrets no longer is a concern. Because the unique key initialization takes place inside the chip or "on the fly" during die fabrication, the security of the system improves.

During the die fabrication phase of the hardware production process , the circuit and the mask ROM are defined by its design topology, which is expressed in a sequence of production masks that are used to manufacture the chip. Towards a later part of the hardware production process, certain fixed chip functions and one-time programmable read-only memories are activated and initialized. Depending on the particular use of the chip, some functions are disabled, only leaving a set of intended circuits active on the manufactured chip. The chip is then shipped to the customer, who may be a device manufacturer responsible for integrating the chip with a consumer electronic device and personalizing the chip.

Generally speaking, the disclosure relates to an improved method for enabling a chip to have a uniqueness property. The method enables a unique key to be established in a plurality of hardware components without using a pre-generated list of unique values, thereby reducing the risk of a massive key theft attack.

In one variant, the improved method may be used during the die fabrication phase of the hardware production process. When chips are mass manufactured for a particular security application (or more than one security applications), dies are fabricated and processed at a relatively high speed. Operations being performed at the hardware production process must be sufficiently efficient, so as to not dramatically slow down the production rate of chip manufacturing.

In some embodiments, a random bit vector may be generated on chip using a random bit generator. The random bit vector is provided to a one-time programmable read-only memory such that it can be stored. The unique key of the chip is based on the generated random bit vector. A derived value from the random bit vector, such as an encrypted unique key or a public key corresponding to the unique key, is then exported out of the chip. In certain embodiments, the generation and export of the unique key is preferably performed during an early phase of the production process before the wafer is cut and the die is provided to a device manufacturer for further personalization. By establishing a mechanism to generate a unique key early in the production process of a consumer electronic device, the unique key generator is established for the chips before they are shipped to the next manufacturer for further packaging, thereby reducing the risk of exposing the keys to other parties.

Specifically, the unique value being programmed onto one-time programmable read-only memories is generated in the chip by a Random Bit Generator (RBG) of a hardware random number generator built-in the chip. The RBG amplifies random fluctuations in the production of the physical chip itself, and the generated key from the RBG preserves the chip's uniqueness property. Many semiconductor constructs or other suitable substrates exhibit such physical randomness that can be amplified for use by the RBG.

In general, a hardware random number generator is an apparatus that generates random numbers from a physical process. Such devices are often based on microscopic phenomena that generate a low-level, statistically random "noise" signal, such as thermal noise or the photoelectric effect or other quantum phenomena. These processes are, in theory, completely unpredictable. A quantum-based hardware random number generator typically consists of a transducer to convert some aspect of the physical phenomena to an electrical signal, an amplifier and other electronic circuitry to bring the output of the transducer into the macroscopic realm, and some type of analog to digital converter to convert the output into a digital number, often a simple binary digit 0 or 1 (so called RBG). By repeatedly sampling the randomly varying signal, a series of random numbers is obtained, and can be used to create a random bit vector.

Hardware random number generators differ from pseudo-random number generators (PRNGs), which are commonly used in software. These PRNGs use a deterministic algorithm to produce numerical sequences. Although these pseudo-random sequences pass statistical pattern tests for randomness, by knowing the algorithm and the conditions used to initialize it, called the "seed", the output can be predicted. While this can quickly generate large quantities of pseudorandom data, it is vulnerable to cryptanalysis of the algorithm. Cryptographic PRNGs resist determining the seed from their output, but still require a small amount of high-quality random data for the seed.

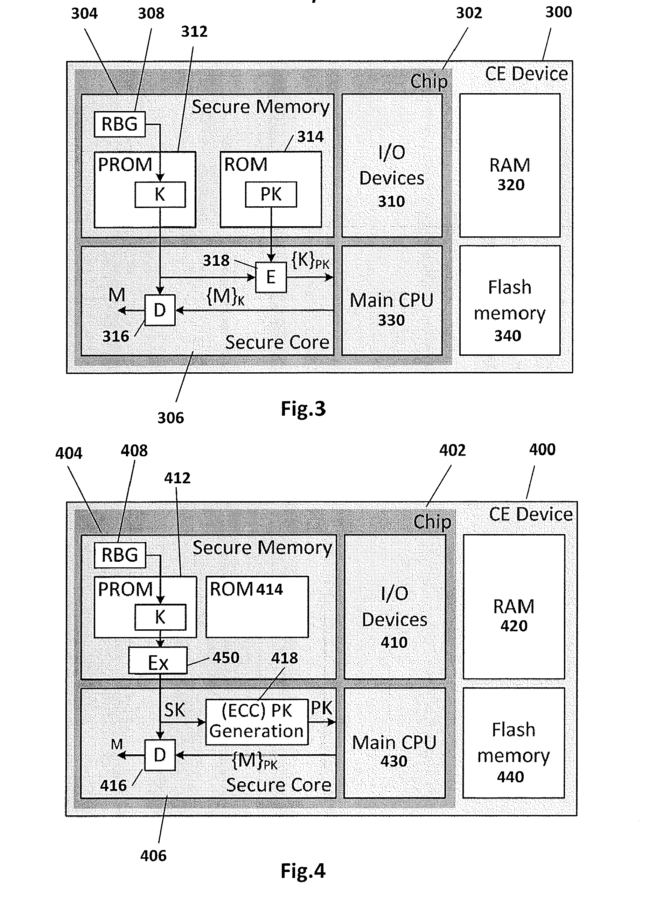

**Fig.3** shows an illustrative chip personalized with a symmetric unique key using an improved scheme.

Chip **302** is intended to be integrated with consumer electronic device **300.** Illustrative consumer electronic device **300** includes at least one of: read-access memory **320** and flash memory **340.** Chip **302** may include secured memory **304,** input/output (I/O) devices **310,** secured core **306,** and main central processing unit (CPU) **330.**

In secured memory **304,** random bit generator **308** may amplify a physical noise source of the chip to produce a random number (or also referred to as a random bit vector) in the chip. The random number is programmed into the one-time programmable read-only memory PROM **312** to serve as basis of the unique key of chip **302,** as denoted by 'K' in **Fig.3****.** The random number generated may be provided to PROM **312** via a communication channel on the chip. The programming of the one-time programmable read-only memory to store the random number is irreversible and may occur during the die fabrication phase of the hardware production process. The unique number programmed into the one-time programmable read-only memory is preferably only accessible to the hardware and firmware of chip **302.** The programmed data is either available only to a dedicated hardware module or to firmware that is executed in strict isolation of other software.

To use random bit generator **308** for this process, a portion of the chip configured to generate random bits using the hardware random number generator, as well as PROM **312,** may be activated temporarily as part of the testing/probing portion of the die fabrication process. In some alternate variants, the random bit generator may be external to chip **302.** Said external random bit generator may be communicably connected to a probe, such that random bits generated by said random bit generator may be inputted to the die (i.e., during testing/probing part of die fabrication phase). A series of random bits forming the random bit vector may be directly programmed into the PROM of the die during the testing/probing portion of the die fabrication process. In these alternate variants, the random bit vector programmed into the PROM may be generated "on the fly" as the dies are being processed, thereby still avoiding the need to input unique values from a pre-generated list of unique values.

In some embodiments, the random number programmed into PROM **312** serves as the unique key of chip **302** (e.g., as a secret key of chip **302).** In some other embodiments, the unique key of the chip is based in part on the random number programmed into PROM **312.** At a later part of the hardware production process (preferably still during die fabrication phase), the secret key K is read from PROM **312** by secure core **306.** A value is derived from the secret key K, such that it is less security sensitive than the secret key K. In the embodiment shown in **Fig.3****,** the derived value is an encrypted secret key K.

The secret key K is encrypted using encryption module **318** to produce encrypted key {K}_{PK}. For instance, the secret key K is encrypted using a public key associated with an external party (e.g., a security application provider). Preferably, encryption operation **518** is performed in hardware, or in a manner that makes it hard for an attacker to obtain or modify the value of secret key K being inputted to encryption operation **518.** Encryption operation **518** may include any suitable public key cryptographic operations for obscuring the key, making it hard for an attacker to obtain the secret key K from the encrypted key {K}_{PK}.

After encryption, the encrypted key {K}_{PK} is transmitted/exported to an external key receiving module configured to receive the key. The exported data may be associated with a serial number of the chip. The collected data (i.e., the encrypted key) is intended for a security application provider that has a secret key SK corresponding to the PK used to encrypt the key. As such the intended security application provider can decrypt {K}_{PK} to obtain K for subsequent security operations.

In some embodiments, the secret key K is encrypted by encryption module **318** under a public key cryptography scheme. The public key used in the encryption operation may be stored in mask read-only memory (ROM) **314** or in the one-time programmable read-only memory PROM **312** of secure memory **304.** A chip manufacturer may be provided with a mask for the ROM **314** or a PROM memory contents that contains a public key associated with a security application provider. To allow the chip manufacturer to produce chips using the same mask for more than one security application provider, the mask ROM **314** may include more than one public keys associated with various security application developers, one of which can be activated for a particular chip.

Encryption operation **318** in secure core **306** is preferably implemented in hardware. For instance, generic IP cores (e.g., DSP and Security IP cores offered by IP Cores, Inc.) can be used for the popular Rivest-Shamir-Adelman (RSA) public key cryptosystem. Said core may take the plaintext, the modulus, and a generic exponent as inputs and produces the encrypted data within secure core **306.** In some embodiments, the RSA encryption process can be as simple as one squaring and one modular addition (e=3). Entrenching the modulus and the exponent (i.e., public key PK) means that it is possible to use a much simpler circuitry with only the plaintext as input.

By combining public key cryptography and hardware random number generation, it is possible to generate and extract the encrypted secret key {K}_{PK} by activating a very minimal part of secure core **306.** The generation and export of the key may be performed at a high speed such that the uniqueness property of the chips may be achieved/established without sacrificing substantial throughput and efficiency. This also enables the external key receiving module to be integrated into the hardware production line to quickly collect and store the exported derived values generated by the chip, during the die fabrication phase of the hardware production process.

The knowledge of public key stored in mask ROM **314** or in one-time programmable read-only memory PROM **312** is not sensitive. Only the party with knowledge of the secret key SK corresponding to the public key used to encrypt K (e.g., the intended security application provider) can derive the value of the unique key K.

Knowledge of the unique key K can be then used to encrypt further messages between secure core **306** and main CPU **330** and/or an external device (not shown). For instance, the key can be used as part of a symmetric key scheme to encrypt a message M (e.g., a session key) to create {M}_{K}. {M}_{K} can then be provided to secure core **316,** when a user using a consumer electronics device having the chip requests to get access to a service. Decryption operation **316** can be applied to obtain the message M. Any cryptographic function having the functionality to decrypt the encrypted message may be used to derive M.

Similar to encryption operation **318,** generic IP cores may be used to provide decryption operation D **316.** Other layers of cryptographic operations (e.g., other desired operations implemented in secure core **306)** may be applied to further increase the security of the contents in M. The contents of M may include further keys and/or information for deriving further keys associated with the particular security application.

Preferably, secure core **306** preserves the confidentiality of the unique key K to ensure that the unique key K cannot be easily obtained by an attacker. For instance, it should be computationally hard/difficult for a hacker to use application software to read the value of K in secure core **306.** In some embodiments, the cryptographic operations in secure core **306** is implemented in a hardware module or in a module containing a dedicated microcontroller or in a firmware module that is executed in strict isolation of other software.

**Fig.4** shows another illustrative chip personalized with an asymmetric keys using another improved scheme. Similar to **Fig.3****,** chip **402** is intended to be integrated with consumer electronic device **400.** Consumer electronic device **400** may include at least one of read-access memory RAM **420,** Flash memory **440.** Chip **402** may include secure memory **404,** input/output (I/O) devices **410,** secure core **406,** and main central processing unit (CPU) **430.**

Random bit generator RBG **408** may generates a random bit vector during the die fabrication process. In some embodiments, one-time programmable read-only memory PROM **412** is programmed with the generated random bit vector during the die fabrication phase. The generated random bit vector serves as the secret key in a public key cryptographic system. The secret key of the chip may be based on the random bit vector stored in PROM **412.** In some variants, RBG **408** may be external to the chip, but is used during the testing/probing part of the die fabrication process to feed a series of random bits to form the random bit vector being programmed onto PROM **412.** The external RBG **408** may be communicably connected to PROM **412** via the probe of a die testing/probing machine at the entity performing die fabrication.

Size of PROM **412** is often limited, thus the generated key that can be programmed may not have a desirable bit length for use directly as a secret key. The real estate limitation of PROM **412** restricts the size of the random bit vector that is programmed onto PROM **412.** The desired bit length of the random bit vector depends on the cryptographic algorithm for which the bit vector is used, and the desired amount of security (e.g., measurement of how hard it is for an attacker to find the secret key from the public key). For popular RSA cryptosystems, asymmetric key pairs are often on the order of thousands of bits (as of 2011). Measures may be implemented to reduce the size of the random bit vector stored in PROM **412.**

One exemplary cryptosystem for suitable for use during the chip manufacturing process is the Elliptic Curve Cryptography (ECC) public key system. Elliptic Curve Cryptography security is based on the discrete logarithm problem. An elliptic curve can be defined either over a prime field or over a binary field. Due to the high-speed requirements of the hardware production cycle, the type of cryptosystem to be used for generating a key pair during the hardware production cycle must be considered and chosen carefully.

In some cases, the secure core does not have a dedicated hardware accelerator for large arithmetic computations. On one hand, RSA key generation is a very lengthy probabilistic process, even on smart cards having dedicated coprocessors, key generation may take several seconds. In hardware production terms, especially during die fabrication or earlier phases of the production process, several seconds can be very costly and detrimental to the efficiency of the hardware production process. On the other hand, generating a public/private key to be used in an ECC scheme is more straightforward than RSA.

Additionally, because the real estate of PROM is limited as well, key length required for adequate amount of security must be considered. If RSA is used, the length of the secret key may preferably be 2048 bits long (512 bytes of one-time programmable memory). If ECC is used, the elliptic curve secret key may preferably be 256 bits long (32 bytes of one-time programmable memory).

The advantage of ECC over RSA is that key generation is faster. In addition, ECC uses smaller key lengths than those used by older schemes (RSA, DSA) to achieve the same desired security level. Even though ECC encryption and decryption processes tend to be less computationally efficient than RSA, it is suitable for a one-time step of exporting the key out of the chip.

To reduce the bit length n of the random bit vector (e.g., to save on PROM usage), expand function **450** in secure memory may be used to convert the random bit vector into a secret key SK with a bit length of n+x. A pseudo-random number generator implemented in hardware or firmware may be used as expand function **450.** The expanded random bit vector may be used a secret key as part of a public key cryptosystem. In another words, the unique key is based on the expanded random bit vector. Effectively, expand function **450** can spread the entropy of n bits over n+x bits, thereby reducing the amount of information that needs to be programmed in PROM **412.** For example, expand function **450** can take the unique value K as input and use it as a seed for a Pseudo Random Number Generator (PRNG). The PRNG can generate a bit vector of length n+x, and use the resulting bit vector from the PRNG to help generate SK. Expand function **450** may also be used in the embodiment shown in **Fig.3****.**

For ECC cryptosystems, public keys may be created first by obtaining a random bit vector c and calculating d, wherein d = (c mod (n-1)) + 1. Taking the resulting bit vector and applying the modulo function, d can be calculated. The resulting value for d can then be used as SK of the ECC scheme, and the corresponding PK can be calculated in an efficient manner using SK and group parameters using the (ECC) PK Generation module **418.** In contrast, RSA key generation involves coming up with large prime numbers and iteratively testing them, and takes much longer. Therefore, an ECC scheme or similar schemes thereof is preferred over RSA key generation for the purpose of generating a public key pair.

In embodiments where ECC is used, chip **402** can internally randomly generate a secret key and calculate fairly efficiently a public key from the secret key and group parameters (e.g., by calculating Q = dG), even during die fabrication. The key generation process avoids the problem of having the chip manufacturer provide pre-generated unique keys as inputs and programming those secret values onto the chip during the chip personalization phase. In addition, the on-chip key generation process occurs sufficiently efficiently to be performed during high-speed/high-throughput phases of the hardware production process.

Alternatively, EIGamal (a discrete logarithm based cryptosystem) public key cryptographic system may also provide an efficient scheme to derive a public key from a randomly generated value for a secret key. The randomly generated value for the secret key may be generated on-chip during manufacturing as well, using RBG **408** and optionally with the expand module **450.**

As described, the generation of the public key may be performed by (ECC) PK Generation Module **418.** To facilitate on-chip public key generation from the secret key, preferably during chip initialization phase of the hardware production process, PK Generation Module **418** may be a hardware module on chip, or a software module that runs under specific conditions and uses firmware code that is stored in mask ROM **414** or in one-time programmable read-only memory PROM **312.** Software access to the secret key is preferably limited to the. Appropriate module on the chip may be activated, e.g., temporarily, for performing PK generation.

After key pair generation, the public key may be exported, preferably during die fabrication, to an external module configured to receive exported public keys. The public key serves as a derived value of the unique key (i.e., the random bit vector or the expanded random bit vector) that is less security sensitive than the unique key. The external module is configured to receive the public key PK that corresponds to the internally generated SK. The external key receiving module may be configured to associate the public keys with identification data CID corresponding to the chip, and store them as <PK, CID> pairs in non-volatile memory. The collected keys may be subsequently provided to an appropriate security application provider. The external module can then subsequently provide PK to a security application provider. As such, the security application provider can construct messages destined to an intended consumer electronic device carrying the chip having the corresponding SK.

With the knowledge of PK, security application providers can then transmit an encrypted message {M} _{PK} by encrypting a message M with the public key PK, destined to a chip that has the corresponding secret key. The export of PK effectively enables a security application developer to encrypt messages that are decryptable by the chip having the corresponding SK. The Chip may then decrypt the encrypted message {M} _{PK}, for example, using decryption module **416,** to obtain M. M may include further keys for the security application. For instance, M may include session keys for loading other keys.

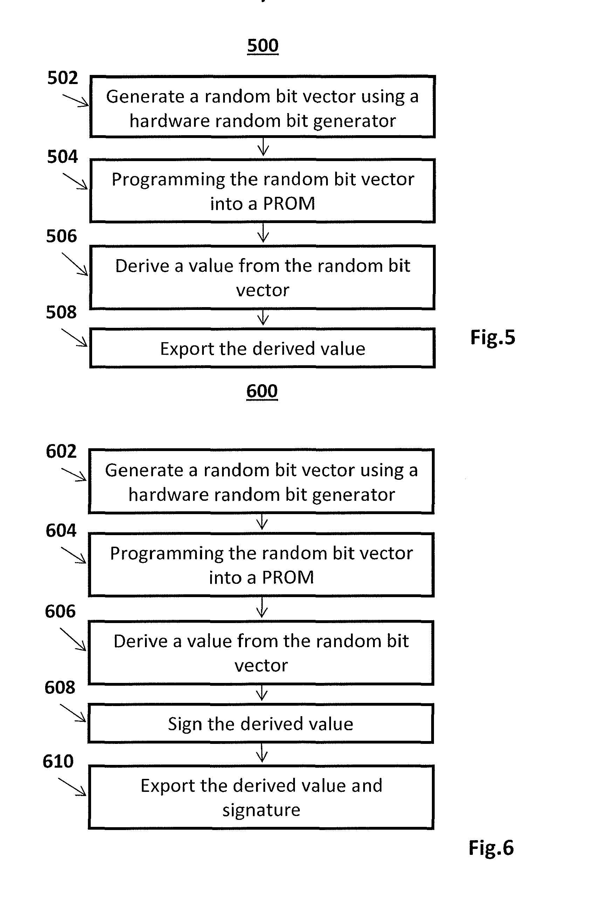

**Fig.5** shows an illustrative method for establishing a uniqueness property in a hardware component. In particular, the illustrative method generally describes steps for enabling the production of a hardware component that has a uniqueness property. In other words, the hardware component is equipped with a unique value that can be used as a unique key. The unique key enables a security application developer to communicate with the hardware component in a relatively secure manner.

In general, the uniqueness property of the chip as described in the improved methods and systems herein is established by generation a random bit vector **502** (e.g., during the hardware production cycle) and having the random bit vector loaded into the PROM (referred to as box **504),** having a value derived from the random bit vector (e.g., encryption or generation of a public key, referred to as box **506).** The derived value is then exported to a receiving module (e.g., box **508),** such that a security application provider can use it to deliver messages to a particular chip. Conventional methods typically uses a set of pre-generated set of secret keys from a central database. Those conventional methods are at risk of a massive key theft attack if an intruder or insider steals the contents of that central database. To solve the problem, the methods and systems described herein have the secret keys generated "on the fly" or internally within a chip (seen as box **502),** in a manner to make sure that only the hardware component knows the secret key. In other words, the disclosed solution to produce chips with the uniqueness property no longer require a central database for storing secret keys associated with each hardware component.

In some variants, the generation of the random bit vector using the random bit generator (seen as box **502)** may occur during the testing/probing part of the die fabrication process. In some embodiments performing the generation, loading, deriving and exportation steps within the facilities of a single entity, the integrity of the process is increased (e.g., the process is contained within one entity's facility). In these variants where the random bit vector is generated during the die fabrication process, the random bit generator may be built-in as part of the circuit of the die. If the RBG is built-in on the chip, the RBG may be temporarily activated/powered to generate a random bit vector, and the random bit vector is then stored to a PROM on the die. Accordingly, the die internally generates a random bit vector for use as the basis of a secret key in an intrinsic manner, making it hard for an external source to obtain the unique key.

Alternatively, the random bit generator may be external to the die, but communicably connected to a testing probe of the die testing machine. During the testing/probing part of the die fabrication process, the testing probe may be configured to input a series of random bits generated by the external random bit generator. The series of random bits generated by the external RBG may form a random bit vector. The probe accordingly may communicably connect the output signal of the RBG and directly program the output random bits into the PROM on the die. In this alternate scheme, the random bit vector is generated "on the fly". This alternate scheme also does not require a central database of pre-generated list of random values.

Using the methods described herein, a value may be derived from the random bit vector, and the derived value may be exported out of the hardware component. In some variants, the value is exported out of the hardware component during the testing/probing part of the die fabrication process. Additionally, in these variants, if no other sufficient authentication methods are present, the value derived from the random bit vector may be exported soon after the value is programmed in the PROM, preferably before the die is provided to another entity in the hardware production cycle.

In some other variants, where the option to generate the random bit vector, loading the random bit vector into PROM, deriving a value from the random bit vector, and/or exporting the derived value, all during the die fabrication process is not available, at least part of the method may be performed after die fabrication. **Fig.6** shows another illustrative method for establishing a uniqueness property in a hardware component.

In situations where the option of generating the random bit vector during the testing/probing phase of die fabrication phase is not available, the generation of the random bit vector (step **602)** may be performed at a later stage of the production cycle, provided that some form of authentication step (step **608)** is available. Preferably, an optional authentication step **608** is implemented in the hardware component to enable a security application provider to trace the exported derived value back to the entity responsible for die fabrication. Authentication step **608** may include authenticated encryption.

The authentication step **608** may enable a security application provider to verify that the exported value is genuinely associated with the entity responsible for creating the circuit on the chip responsible for random number generation (step **602),** programming the value into PROM (step **604),** derivation of a value (step **606),** and the export of the derived value (step **610).**

One example authentication method may include symmetric authentication. In addition to having a functional RBG on chip to internally generate a random bit vector, the die may be programmed during the die fabrication process with a symmetric key. In some embodiments, a batch of dies may share the same symmetric keys. Given that the die is fabricated by an authorized/trusted entity, the symmetric key (known to the die fabrication entity and the security application provider) enables the chip to generate a signature that can be traced back to the die fabrication process. In other words, this authentication method may prevent the exported values being generated by an unauthorized entity.

Examples of cryptosystems suitable for implementing the authentication method include 3DES or AES. For illustration, without the loss of generality, an example of establishing a unique key in a hardware component using a combination of ECC and AES is described. During die fabrication, a symmetric signature key (e.g., a 128-bit symmetric signature key) may be programmed onto the PROM during the testing/probing stage of the die fabrication process. The symmetric signature key is paired with a unique serial number of die (e.g., a 128-bit serial number). In addition, the die may include an RBG for generating a random bit vector. Furthermore, the die may include the necessary circuits for loading the output random bit vector from the RBG into PROM, as well as the circuits for deriving a value from the random bit vector in the PROM and exporting the derived value. At this point, the die may be processed by another entity, such as an entity responsible for chip initialization or chip personalization, where the die is placed in other materials for further processing.

Possibly with a different production entity, the chip containing the die may be equipped with a random bit generator on the chip. In one embodiment, said random bit generator is activated to generate a random bit vector. The random bit vector may be 256-bit long, or is shorter than 256-bit long (if an expand function is used to expand a shorter length random bit vector into a longer bit vector using a PRNG). A unique key is based on the random bit vector. The chip then generates a public key based on the unique key (i.e., using the unique key as a secret key out of a key pair) by applying point multiplication with a pre-defined generator point and the generated secret symmetric key (ECC method). The generated public key has two components (X, Y) and each is 256-bit. The chip may perform an authenticated encryption operation with AES in Galois counter mode to encrypt the 512-bit public key pair using the symmetric signature key, which was programmed in the chip during die fabrication, as an encryption key and using the serial number as the initial value of the counter. This illustrative encryption method may produce a 512-bit encrypted public key (X', Y') with a 128-bit authentication tag T. The chip may then export the encrypted and signed public key (X', Y', T) and its associated serial number to a receiving component. The receiving entity associated with the receiving component may then use the serial number to determine the associated symmetric signature key. Using the symmetric signature key, the receiving entity (e.g., a security application provider) may use the same AES Galois counter mode to decrypt the public key (X, Y) and verify the authentication tag T. If correct, the system may store the public key (X, Y) in a database, and associate the public key (X, Y) with the serial number of the chip. Subsequently, the receiving entity may use the public key to encrypt messages to the chip.

In some embodiments, the same scheme may be applied during the initial boot of a consumer electronics device, internally generating a random number and storing it in protected form or in secured memory. Rather than initializing during the hardware production process, the unique key may be established when the chip is first booted. A derived value of the random bit vector or an expanded random bit vector (i.e., the unique key) or a public key derived from the random value is then exported via a communication channel to an entity (i.e., a security application provider) configured to receive the exported value. In this manner, the consumer electronic devices and chips may be mass manufactured while still sufficiently preserving the uniqueness property at the initial boot time, provided that the exported value is authenticated using a suitable method (e.g., signature using a symmetric signature key or an asymmetric signature key under a public key signature scheme). If an asymmetric key is used, a signature for the exported data is calculated using a signing key and the signature is included with the exported data. At a later stage a security application provider uses a signature verification key (different from the signing key) to check the signature included in the exported data.

One embodiment of the invention may be implemented as a program product for use with a computer system. The program(s) of the program product define functions of the embodiments (including the methods described herein) and can be contained on a variety of computer-readable storage media. The computer-readable storage media can be a non-transitory storage medium. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A method for establishing a key for a chip including a die, said method comprising:
receiving, from a hardware random number generator communicably connected to a one-time programmable memory in the chip, a series of random bits, said series of random bits forming a random bit vector; and
storing the random bit vector in the one-time programmable memory of the chip, wherein the key for the chip is based on the random bit vector.

2. The method of claim 1, further comprising:
deriving, in response to storing the random bit vector, using a derivation module on the chip, a value from the random bit vector stored in the one-time programmable memory of the chip to generate a derived value; and
exporting the derived value to an external receiving module communicably connected to the chip to enable a security application provider to encrypt a message that is decryptable by the chip using a key based on the random bit vector stored in the one-time programmable memory of the chip.

3. The method of claim 2, wherein deriving the value from the random bit vector stored in the one-time programmable memory of the chip to generate a derived value comprises:
reading a public key associated with the security application provider from a read-only memory on the chip; and
encrypting, in the chip, the random bit vector stored in the one-time programmable using the public key, wherein the derived value is based on the encrypted random bit vector.

4. The method The method of claim 2, wherein deriving the value from the random bit vector stored in the one-time programmable memory of the chip to generate a derived value comprises:
providing the random bit vector stored in the one-time programmable memory to a pseudo random number generator on the chip to generate an expanded key having a longer bit length than the random bit vector;
reading a public key associated with the security application provider from a read-only memory on the chip; and
encrypting, in the chip, the expanded key using the public key, wherein the derived value is based on the encrypted expanded key.

5. The method of any of claims 3 or 4, wherein the read-only memory on the chip is at least one of: a mask read-only memory and a one-time programmable read-only memory.

6. The method of claim 2, wherein deriving the value from the random bit vector stored in the one-time programmable memory of the chip to generate a derived value comprises:
generating, using a public key generator in the chip, a public key from the random bit vector stored in the one-time programmable read-only memory using the random bit vector as a secret key, wherein the derived value is based at least in part on the public key.

7. The method of claim 2, wherein deriving the value from the random bit vector stored in the one-time programmable memory of the chip to generate a derived value comprises:
providing the random bit vector stored in the one-time programmable memory to a pseudo random number generator on the chip to generate a secret key having a longer bit length than the random bit vector;
generating, using a public key generator on the chip, a public key corresponding to the generated secret key, wherein the derived value is based in part on the public key.

8. The method according to claim 6 or 7, wherein generating the public key comprises using a key generation method under the Elliptic Curve Cryptography scheme or the ElGamal encryption scheme.

9. The method according to any of claims 3-5 wherein deriving the value from the random bit vector stored in the one-time programmable memory of the chip to generate a derived value further comprises:
performing, in the chip, an authenticated encryption on the encrypted random bit vector using a symmetric signature key associated with the chip, to generate an authenticated key, wherein the derived value is based on the authenticated key.

10. The method according to any of claims 6-8 wherein deriving the value from the random bit vector stored in the one-time programmable memory of the chip to generate a derived value further comprises:
performing, in the chip, an authenticated encryption on the generated public key using a symmetric signature key associated with the chip, to generate an authenticated key, wherein the derived value is based on the authenticated key.

11. The method according to claim 9 or 10, wherein the authenticated public key includes encrypted data and an authentication tag, wherein the encrypted data and the authentication tag are decryptable and verifiable, respectively, by the security application provider having the symmetric signature key associated with the chip.

12. The method according to any of the above claims, wherein the generated series of random bits from the hardware random number generator is communicably provided to the die of the chip via a testing probe of a die testing machine, wherein the hardware random number generator is external to the chip.

13. The method according to any of claims 1-11, wherein the hardware random number generator is part of the chip.

14. The method according to any of the above claims, wherein the hardware random number generator generates the series of random bits during testing of the die of the chip.

15. The method according to any of claims 1-13, wherein the hardware random number generator is activated to generate the series of random bits in response to a request from the security application provider.
